# EUROPEAN PATENT SPECIFICATION

(11) **EP 1 378 446 B1**
(45) Date of publication and mention of the grant of the patent: **09.08.2017**
(21) Application number: 03077100.0
(22) Date of filing: 30.06.2003
(51) Int. Cl.: B64D 43/00, G01D 7/08

(54) **Method and apparatus for displaying aircraft engine characteristics**
Verfahren und Vorrichtung zum Anzeigen Flugzeugmotorparametern
Méthode et dispositif pour l'affichage des charactèristiques d'un moteur d'avion

(30) Priority: 03.07.2002 US 189114; 06.06.2003 US 476713 P
(43) Date of publication of application: 07.01.2004
(73) Proprietor: The Boeing Company, Chicago, IL 60606-1596 (US)
(72) Inventor: Sikora, Joseph A., Seattle, Washington 98103 (US)
(74) Representative: Boult Wade Tennant

(56) References cited:
- EP-A- 0 286 120
- DE-A- 3 315 386
- US-A- 6 118 385
- "Peugeot 406 Handbook (English)" 14 May 1998 (1998-05-14), AUTOMOBILES PEUGEOT , PARIS, FR , XP002259484 * pages 30,38 *

## Description

### TECHNICAL FIELD

The present invention relates generally to methods and systems for displaying aircraft engine characteristics, such as the operational state of the engines, to the flight crew of the airplane.

### BACKGROUND

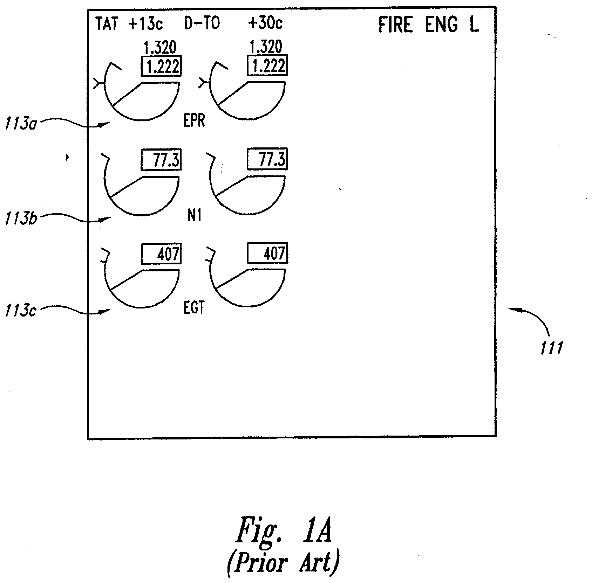

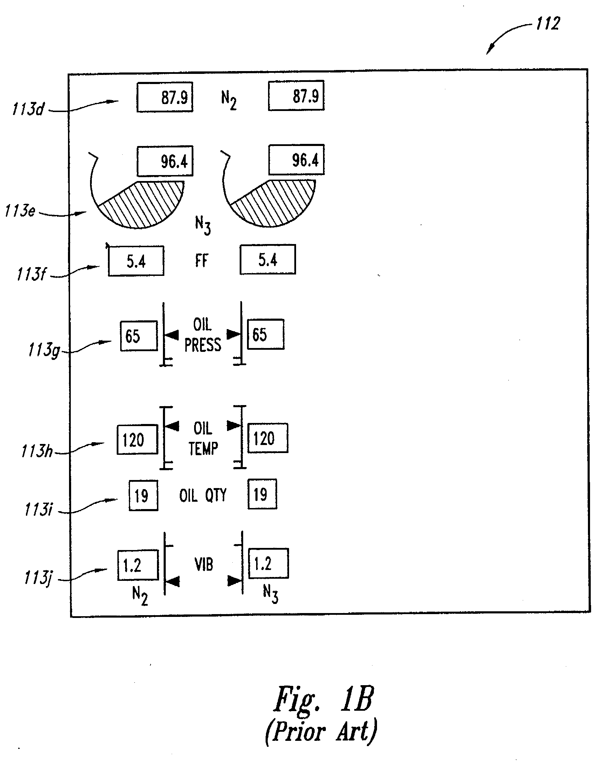

Modern aircraft engine flight deck displays typically include computer-driven display screens dedicated to presenting engine status information. These display screens typically present to the pilots engine data indicating the values of a variety of engine operating parameters. For example, the display screens can present a primary engine display 111 (shown in Figure 1A) and a secondary engine display 112 (shown in Figure 1 B). The primary engine display 111 can present top-level engine parameter data, such as exhaust pressure ratio (EPR) at an EPR display 113a, low pressure compressor shaft rotation speed (N1) at an N1 display 113b, and exhaust gas temperature (EGT) at an EGT display 113c. The primary engine display 111 can include multiple sets of displays 113a-c (two are shown in Figure 1 A), one set for each engine of the aircraft.

The secondary engine display 112 can include information corresponding to other engine operating parameters. For example, the secondary engine display 112 shown in Figure 1B can include intermediate compressor shaft rotation speed (N2) at an N2 display 113d, high pressure compressor shaft rotation speed (N3) at an N3 display 113d, fuel flow at a fuel flow display 113f, oil pressure at an oil pressure display 113g, oil temperature at an oil temperature display 113h, oil quantity at an oil quantity display 113i, and engine vibration at an engine vibration display 113j.

One characteristic associated with the foregoing approaches for displaying engine data is that the pilot or other crew member operating the aircraft must be able to quickly view the data, integrate and interpret the data, and determine whether the data warrant an action on the part of the crew. If an action is required, in many cases, the pilot must determine what the action is. One drawback with this approach is that it can be time-consuming and costly to train pilots to quickly and efficiently carry out the foregoing steps.

One approach to addressing the foregoing problem is to display engine thrust, as well as other engine operating parameters, in a color coded manner that indicates when the thrust or other parameters exceed predetermined limits. Such methods are disclosed in U.S. Patent No. 5,050,081 and DE 33 15 386. However, this approach may also suffer from some of the foregoing drawbacks, namely, that presenting pilots with a plurality of parameter information still requires them to integrate and interpret the information. Also it may still be time-consuming to train pilots to understand the information presented to them, and it may take time to train the pilots to understand what action is required based on the data they see. Another approach is known from XP010106756 (MD-11 Electronic Instrument System, J. Morgan and J. Miller, PROCEEDINGS OF THE DIGITAL AVIONICS SYSTEMS CONFERENCE. SEATTLE, OCT. 5 - 8, 1992, doi:10.1109/ DASC.1992.282148).

### SUMMARY

The present invention is directed toward a method for displaying aircraft information according to claim 1. In one embodiment of the invention, the method includes directing the display of an icon that represents a qualitative, overall operational state of an aircraft engine, with the overall operational state being determined from a plurality of engine operating parameters. The method can further include directing a change in the display of the icon when the overall operational state of the aircraft engine changes from a first overall operational state to a second overall operational state. For example, the method can include displaying an icon having a shape representative of an aircraft engine, and can further include changing a color of the icon as the overall operational state of the engine changes.

In another embodiment of the invention, the method can include directing a display of a first visual cue corresponding to a first pilot instruction when the overall operational state of the aircraft engine is the first overall operational state, and directing a display of a second visual cue corresponding to a second pilot instruction when the overall operational state of the aircraft engine is the second overall operational state, with the second pilot instruction being different than the first pilot instruction. For example, the method can include directing the display of the icon to have a first color (such as amber) when the overall operational state of the engine is such that the power to the engine should be reduced. The color of the icon can be changed to a second color (such as red) when the overall operational state of the engine is such that the engine should be shut down.

In another embodiment of the invention, a computer system for displaying information corresponding to the operation of an aircraft engine includes a determining component with contents capable of determining a qualitative overall operational state of the aircraft engine based on a plurality of engine operating parameters. The computer system can further include a display component with contents capable of displaying an icon indicating the overall operational state of the aircraft engine and changing a characteristic of the icon when the overall operational state of the aircraft engine changes from a first overall operational state to a second overall operational state.

### BRIEF DESCRIPTION OF THE DRAWINGS

Figures 1A-1B illustrate engine flight deck displays in accordance with the prior art.
Figure 2 is a schematic illustration of a system for displaying aircraft engine characteristics In accordance with an embodiment of the invention.
Figure 3 is a flow diagram illustrating a process for displaying aircraft engine characteristics in accordance with an embodiment of the invention.
Figure 4 illustrates a display for presenting aircraft engine states and pilot instruction cues in accordance with an embodiment of the invention.
Figure 5 illustrates a display for presenting aircraft engine states and pilot instruction cues in accordance with another embodiment of the invention.

### DETAILED DESCRIPTION

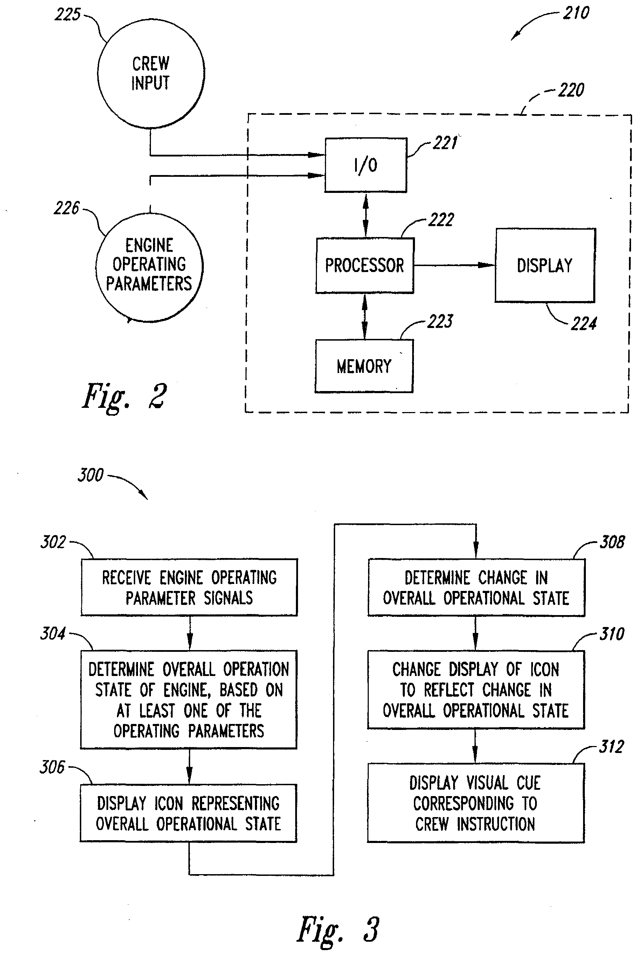

The present disclosure describes methods and systems for displaying aircraft engine characteristics. Many specific details of certain embodiments of the invention are set forth in the following description and in Figures 2-5 to provide a thorough understanding of these embodiments. One skilled in the art, however, will understand that the present invention may have additional embodiments, and that the invention may be practiced without several of the details described below.

Figure 2 is a schematic block diagram illustrating a system 210 that displays the state of one or more aircraft engines in accordance with an embodiment of the invention. In one aspect of this embodiment, the system 210 can include a computer 220 having one or more input/output devices 221, a processor 222, a memory 223, and a display unit 224. In other embodiments, the functions carried out by the system 210 can be distributed over a plurality of computers or processing platforms. In any of these embodiments, the input/output devices 221 can receive signals corresponding to engine operating parameter signals 226, and, optionally, crew input signals 225. The processor 222 can determine the overall operational state of each engine, based at least in part on one or more of the engine operating parameter signals 226. The processor 222 can then direct the display of an icon on the display unit 224 that qualitatively indicates the overall operational state of the engine and, optionally, a visual cue that indicates to the pilot (a) whether an action is required and if so, (b) what the action should be.

In one embodiment, the computer 220 can be generally similar to existing avionics computers, but can be programmed and/or configured to carry out the foregoing processes. For example, the computer 220 can include an engine controller computer (EEC or FADEC) and/or an aircraft display computer. In any of these embodiments, one or more of the input/output devices 221 can be configured to receive the engine operating parameter signals 226 directly from the aircraft engines and/or from intermediate computers or processors. One or more of the input/output devices 221 can be configured to receive the crew input signals 225 and can accordingly include a keypad, mouse pad, touch screen, or other such device. The crew input signals 225 can be used to tailor certain aspects of the manner in which information is presented on the display 224, or obtain additional information, without affecting the content of the information. One or more of the input/output devices 221 can also be configured to access a computer-readable medium (such as a CD or diskette). Directions for carrying out processes in accordance with embodiments of the invention can be stored on such media, and/or in the memory 223. The display 224 on which the information is presented can include a CRT screen, an LCD screen, or any other device that is configured to present engine-related information to the crew.

Figure 3 is a flow diagram illustrating a process 300 for presenting aircraft engine information to the crew. The process 300 includes receiving engine operating parameter signals (process portion 302). The overall operational state of the engine is then determined, based on at least one of the operating parameters (process portion 304). In one embodiment, the overall operational state of the engine can be selected from one or more pre-established states. For example, the pre-established states can include states for which (a) the engine is shut down, (b) the engine is operating normally, (c) the engine is running and is operating with a malfunction or condition that requires the pilot to reduce the engine power level, and (d) the engine is running and operating with a malfunction or condition that requires the pilot to shut the engine down. In other embodiments, the pre-established states can include a state in which the engine is starting up, a state in which the engine has been shut down normally and is available for restart, and/or a state in which the engine has been shut down in an emergency procedure and/or is unavailable for restart.

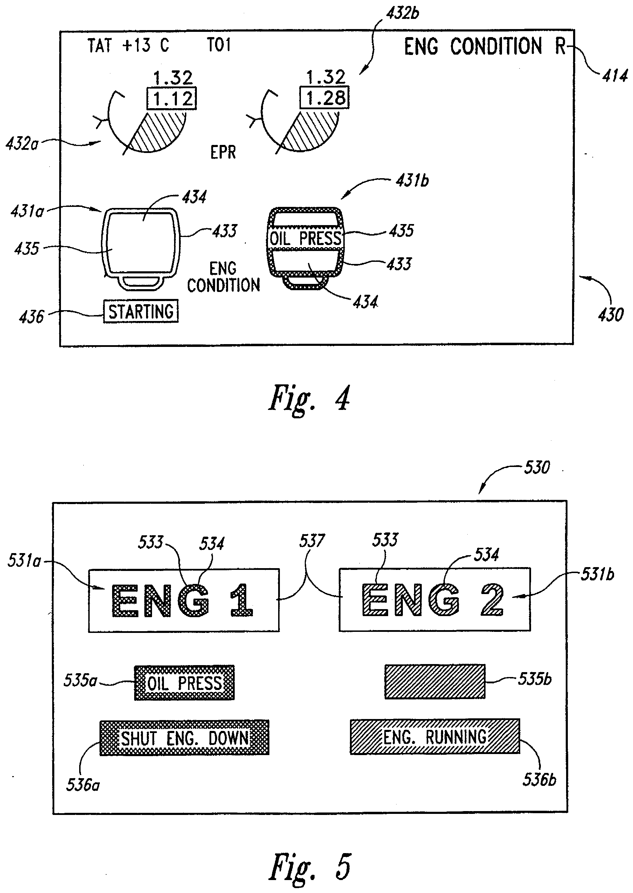

In process portion 306, an icon is displayed representing the overall operational state of the engine. The process 300 can further include determining a change in the overall operational state (process portion 308) and changing the display of the icon to reflect changes in the overall operational state (process portion 310). The process 300 can further include displaying one or more visual cues corresponding to a pilot instruction that is based on the operational state of the engine (process portion 312). Further details of the content and manner in which the engine-related information is displayed are provided below with reference to Figures 4 and 5.

Figure 4 illustrates a display 430 suitable for presentation on the display device 224 (Figure 2) in accordance with an embodiment of the invention. In one aspect of this embodiment, the display 430 presents one or more icons 431 (two are shown in Figure 4 as a first or left icon 431 a and a second or right icon 431 b). In one embodiment, each icon 431 can include an outline 433 having a shape that is roughly representative of an aircraft engine. In other embodiments, the icons 431 can have other shapes, such as those described below with reference to Figure 5. In any of these embodiments, each icon 431 represents a qualitative, overall operational state of the corresponding aircraft engine, such as the states described above with reference to Figure 3. The overall operational state is a level of abstraction beyond engine operating parameters (such as N1, EPR, or EGT) and quantities calculated from the engine operating parameters (such as engine thrust).

In another aspect of an embodiment shown in Figure 4, a characteristic of the icon 431 indicates the present state of the aircraft engine and changes to indicate a change in state of the aircraft engine while the overall size of the icon 431 and its position on the display 430 remains constant. For example, in one embodiment, the color of the outline 433 represents the present state of the aircraft engine, and changes as the state of the aircraft engine changes. In one aspect of this embodiment, the outline 433 can be white when the aircraft engine is not running. If the aircraft engine is operating normally, the outline 433 can shift to green.

The characteristic of the icon 431 can indicate not only the state of the aircraft but whether the engine requires pilot or other crew intervention, and if so, what that intervention should be. For example, if the aircraft engine is operating with a condition or malfunction that requires the thrust of the engine to be reduced, the color of the outline 433 can be amber. If the aircraft engine is operating at a condition or with a malfunction that warrants or requires the engine to be shut down, the color of the outline 433 can be red. In other embodiments, other colors can indicate these or other overall engine states. In any of these embodiments, the color of the outline 433 not only indicates the state of the aircraft engine, but also provides a clear visual cue to the operator as to what type of action is required as a result of the engine state.

In other embodiments, other characteristics of the icon 431 can change as the overall operational state of the aircraft engine changes. For example, in one embodiment, the line thickness of the outline 433 can change in addition to or in lieu of changing the color of the outline 433. In another embodiment, an internal region 434 defined by the outline 433 can change in color, shading or other easily viewed aspects again, in addition to or in lieu of changing the color of the outline 433. In other embodiments, other characteristics of the icon 431 can change to indicate the change in state.

In still further embodiments, the display 430 can include information in addition to that described above. For example, the icons 431 can include an operating parameter display 435 that is blank when the engine is shut down, starting, or operating normally (as indicated by icon 431 a). When the engine is not operating normally, the operating parameter display 435 can indicate the one or more engine operating parameters that precipitated the need for operator intervention. For example, (as shown in Figure 4), the second icon 431 b has an operating parameter display 435 that presents the text "OIL PRESS", which indicates that an oil pressure reading outside a selected range precipitated the change in color of the icon 431 b to amber or red. In one embodiment, the determination to present the icon 431 with a particular characteristic can be based upon all the evaluated engine operating parameters being within corresponding selected ranges (for example, when the engine is operating normally), or any one of the engine operating parameters being outside the corresponding selected range (for example, if the engine power is to be reduced or halted). In another embodiment, this determination can require more than one engine operating parameter to be out of range.

In one embodiment, the corresponding range can refer to a range of values for a single engine operating parameter (e.g., EGT); in other embodiments, the corresponding range can refer to a rate of change of an engine operating parameter, a relationship (such as a ratio) of one engine operating parameter to another, or other algorithms that operate on one or more engine operating parameters. These algorithms can be used to detect engine operating conditions, such as an engine surge condition, which can be based on, among other parameters, combuster burner pressure. In any of these embodiments, if more than one engine operating parameter or condition dictates the characteristic with which the icon 431 is displayed, all such engine operating parameters or conditions can be displayed at the operating display 435. Alternatively, less than all the out-of-range engine operating parameters can be displayed at the operating display 435.

The display 430 further includes a state indicator text field 436 that indicates, with text, the state of the aircraft engine and/or a characteristic of the state. For example, the state indicator text display 436 can indicate that the corresponding left engine is not yet running (consistent with the white outline 433 of the icon 431 a) and furthermore, that the left engine is in the process of starting. In other embodiments, the state indicator text field 436 can describe, in text, other characteristics of the overall operational state of the aircraft engine.

The display 430 can also include thrust indicators 432, such as EPR (shown as a first or left thrust indicator 432a and a second or right thrust indicator 423b). The thrust indicators 432 can graphically depict the thrust level produced by the corresponding engine, (and/or an engine operating parameter representative of thrust), along with a numerical representation of the thrust level, and an indicator of any limits associated with the thrust level. The display 430 can also include an alert 414 (such as an EICAS alert on Boeing models) that presents a textual message for the pilot providing further details of a condition that may warrant or require operator action.

One feature of an embodiment of the system 210 described above with reference to Figures 2-4 is that the icon 431 presents to the pilot or other operator a qualitative, high-level indication of the operational state of the aircraft engine or engines. An advantage of this feature is that the pilot need not integrate and interpret a variety of engine parameters to determine the operational state of the engine, but can instead understand with only a glance what the operational state of the engine is. For example, the pilot can tell at a glance that a particular engine is operating normally or abnormally without checking to see that each of a variety of engine parameters are within normal limits.

Another feature of an embodiment of the system 210 described above with reference to Figures 2-4 is that the overall operational state of the corresponding aircraft engine can be determined on the basis of a plurality of engine operating parameters. An advantage of this feature is that the determination of the state can be less likely to be incorrect because it includes an evaluation and/or synthesis of several engine parameters. For example, an indication that the engine is operating normally can be based on a determination that all the engine operating parameters are within an acceptable range of values and a determination that the engine is operating improperly can be based on a determination that any one of the operating parameters is outside the relevant acceptable range of values.

Still another feature of an embodiment of the system 210 described above with reference to Figures 2-4 is that one or more characteristics of the icon 431 can change as the overall operational state of the corresponding aircraft engine changes. The change in the characteristic of the icon 431 provides a clear visual cue to the pilot that the operational state of the engine has changed. Accordingly, the pilot need not look at, integrate and interpret one or more displays to determine when the display indicates a change in state, but can instead tell immediately by glancing at the display 430 that the state of the aircraft engine has changed.

Yet another feature of an embodiment of the system 210 described above with reference to Figures 2-4 is that for at least some operational states, the characteristic of the icon 431 can correspond directly to recommended and/or necessary pilot actions. Accordingly, the pilot need not recall the specific action required by the engine's state, or refer to a manual to determine what to do in response to the engine state, but can instead recognize immediately upon viewing the display 430 what action is required. For example, if the icon 431 is displayed in amber, the pilot can immediately recognize that power to the corresponding engine should be reduced, regardless of which engine operating parameter(s) triggered the indication. If after reducing power, the icon 431 turns green, the pilot can immediately recognize that the corresponding engine is now operating within normal limits. If despite one or more power reductions, the icon turns red, the pilot can immediately recognize that the corresponding engine should be shut down, again, regardless of which engine operating parameter(s) triggered the indication.

Of course, if the pilot wishes to obtain further information about specific engine operating parameters, he or she can receive the information either from the display 430, e.g. via the operating parameter display 435, or via other conventional displays, such as a secondary engine display. In other embodiments, the pilot can query the computer 220 (Figure 2) with an input signal 225 (Figure 2) to obtain further information. For example, the pilot can align a cursor with the icon with the icon 431 and click a mouse key, or select some other input key to obtain parameter data for the corresponding engine.

Figure 5 is a partially schematic illustration of a display 530 configured in accordance with another embodiment of the invention. In one aspect of this embodiment, the display 530 includes two icons 531 (shown as a first or left icon 531 a and a second or right icon 531 b) that indicate the overall operational state of the corresponding aircraft engines. In a further aspect of this embodiment, the icons 531 have the form of text characters. In other embodiments, the icons 531 can have other shapes and/or formats. In any of these embodiments, characteristics of the icons 531 indicates the state of the corresponding aircraft engine and changes when the state of the corresponding aircraft engine changes. For example, each icon 531 can have an outline 533 that changes in color, thickness, and/or intensity. In another embodiment, each icon 531 can include an interior region 534 that changes color when the state of the corresponding aircraft engine changes. In still another embodiment, each icon can be presented against a background field 537, and the background field can change in color or another characteristic as the state of the corresponding engine changes.

The display 530 can further include additional information regarding details of the aircraft engine operation. For example, the display 530 can include operating parameter displays 535 (shown in Figure 5 as operating parameter displays 535a and 535b) that indicate which engine operating parameter, if any, precipitated the overall operational state indicated by the icon 531. The display 530 further includes state indicator text fields 536 (shown as fields 536a and 536b) for each icon 531 which indicate, via text, further details of the corresponding engine state. For example, if the state of the engine represented by the first icon 531 a is such that the pilot should shut the engine down, the text field 536a can include a message indicating that the pilot should shut the engine down. This message, along with the operating parameter display 535a and the icon 531 a can all share the same visual characteristic. For example, if the icon 531 a is displayed in red, the corresponding operating parameter display 535a and state indicator text field 536a can also be displayed in red. If the corresponding engine is operating normally (for example, as indicated by the second icon 531b) the corresponding operating parameter display 535b can be blank, and the corresponding state indicator text field 536b can indicate that the engine is running. The second icon 531 b and the corresponding operating parameter display 535b and state indicator text field 536b can all share the same characteristic, such as a green display color.

In other embodiments, the characteristics of the icons 531a and/or the operating parameter displays 535 and/or the state indicator text fields 536 can have other characteristics that reflect the current overall operational state of the corresponding engine, and provide an indicator for pilot action, if such Is required. For example, in one example the icon 531a and associated display fields can be constantly illuminated when the engines are shut down or running normally. These fields can blink at a relatively slow rate when the pilot is required to reduce power to the corresponding engine, and can blink at a more rapid rate when the pilot is required to shut the engine down. These characteristics of the icon and associated display elements can be employed in addition to or in lieu of the color change characteristic described above. In other embodiments, other characteristics of the icon and associated display fields can reflect the current state of the corresponding engine and any action required by the pilot based on the current state.

From the foregoing, it will be appreciated that specific embodiments of the invention have been described herein for purposes of illustration, but that various modifications may be made without deviating from the scope of the invention. Accordingly, the invention is not limited except as by the appended claims.

## Claims

1. A method for displaying aircraft engine information, comprising:
receiving a plurality of signals corresponding to the plurality of engine operating parameters; and
if all the engine operating parameters are within corresponding ranges, determining that the overall operational state of the aircraft engine is a first overall operational state; or
if fewer than all the engine operating parameters are within the corresponding ranges, determining that the overall operational state of the aircraft engine is a second overall operational state;
directing the display (430;530) of an icon (431 ;531) that indicates a qualitative overall operational state of an aircraft engine, the overall operational state being determined from the plurality of engine operating parameters; and
directing a change in the display of the icon when the overall operational state of the aircraft engine changes from the first overall operational state to the second overall operational state, wherein the change includes changing a color of the icon from a first color to a second color different than the first color; and
**characterised by**
directing the display of a text message (435;535) at least proximate to the icon corresponding to the cause of the change from the first overall operational state to the second overall operational state.

2. The method of claim1, further comprising displaying the text message only when the engine operating parameter that caused the change in overall operational state is outside a particular range.

3. The method of claim 2, comprising displaying the text message in an operating parameter display (435) included in the icon (430) such that the operating parameter display is blank when the engine is shut down, starting or operating normally, and such that the operating parameter display indicates the engine operating parameter that caused the change in overall operational state when the engine is not operating normally.

4. The method of any of claims 1-3, wherein the plurality of engine operating parameters is selected from engine rpm, thrust, exhaust pressure ratio, exhaust gas temperature, oil pressure, oil temperature, oil quantity, fuel flow, combuster burner pressure and vibration.

5. The method of any of claims 1-4 wherein directing the display of an icon includes directing the display of an icon having a shape (433;533) representative of the aircraft engine.

6. The method of any of claims 1-5 wherein directing a change in the display of the icon includes directing a change in a line thickness of the icon.

7. The method of any of claims 1-6 wherein directing a change in the display of the icon includes directing a change in a line intensity of the icon.

8. The method of any of claims 1-7 wherein directing a change in the display of the icon includes directing a change in a background shading of the icon.

9. The method of any of claims 1-8 wherein directing the display of an icon includes directing the display of text corresponding to an identity of the aircraft engine.

10. The method of any of claims 1-9, further comprising directing the display of an informational text message (436;536) corresponding to the state of the aircraft engine.

11. The method of any of claims 1-10, further comprising displaying a graphical representation of actual and available engine thrust in addition to the icon.

12. The method of any of claims 1-11, further comprising directing a display corresponding to pilot instructions based at least in part on the overall operational state of the aircraft engine.

13. The method of any of claims 1-12, further comprising:
directing a display corresponding to a first pilot instruction when the overall operational state of the aircraft engine is the first overall operational state; and
directing a display corresponding to a second pilot instruction when the overall operational state of the aircraft engine is the second overall operational state, the second pilot instruction being different than the first pilot instruction.

14. The method of claim 13, further comprising:
directing a display of a first visual cue corresponding to the first pilot instruction; and
directing a display of a second visual cue corresponding to the second pilot instruction.

15. A method according to any of claims 1 to 14, wherein the engine is not running when the overall operational state is the first overall operational state and the engine is running within normal limits when the state is the second overall operational state;
the method further comprising:
changing a color of the icon to a third color when the overall operational state of the aircraft engine changes to a third overall operational state in which the aircraft engine is operating with a malfunction that requires a reduction in engine power; and
changing a color of the icon to a fourth color when the overall operational state of the aircraft engine changes to a fourth overall operational state in which the aircraft engine is operating with a malfunction that requires the aircraft engine to be shut down.

16. The method of any of claims 1-15 wherein the aircraft engine is a first aircraft engine and the icon is a first icon, and wherein the method further comprises:
directing the display of a second icon that indicates an overall operational state of a second aircraft engine, the overall operational state of the second aircraft engine being determined from at least one engine operating parameter of the second aircraft engine; and
directing a change in the display of the second icon when the overall operational state of the second aircraft engine changes.

17. A computer-readable medium whose contents cause a computing device to operate according to the method of any preceding claim.

18. A computer system programmed to execute the method according to any of claims 1-16.

## Patentansprüche

1. Verfahren zum Anzeigen von Luftfahrzeugtriebwerksinformationen, das umfasst:
Empfangen von mehreren Signalen, die den mehreren Triebwerksbetriebsparametern entsprechen; und
Bestimmen, dass der Gesamtbetriebszustand des Luftfahrzeugtriebwerks einem ersten Gesamtbetriebszustand entspricht, wenn sich alle Triebwerksbetriebsparameter innerhalb entsprechender Bereiche befinden; oder
Bestimmen, dass der Gesamtbetriebszustand des Luftfahrzeugtriebwerks einem zweiten Gesamtbetriebszustand entspricht, wenn sich weniger als alle Triebwerksbetriebsparameter innerhalb der entsprechenden Bereiche befinden;
Anweisen der Anzeige (430; 530) eines Icons (431; 531), das einen qualitativen Gesamtbetriebszustand eines Luftfahrzeugtriebwerks angibt, wobei der Gesamtbetriebszustand aus den mehreren Triebwerksbetriebsparametern bestimmt wird; und
Anweisen einer Änderung der Anzeige des Icons, wenn sich der Gesamtbetriebszustand des Luftfahrzeugtriebwerks von dem ersten Gesamtbetriebszustand in den zweiten Gesamtbetriebszustand ändert, wobei die Änderung eine Farbänderung des Icons von einer ersten Farbe in eine zweite Farbe umfasst, die sich von der ersten Farbe unterscheidet; und
**gekennzeichnet ist durch**
Anweisen der Anzeige einer der Ursache für die Änderung von dem ersten Gesamtbetriebszustand in den zweiten Gesamtbetriebszustand entsprechenden Textnachricht (435; 535) zumindest in der Nähe des Icons.

2. Verfahren nach Anspruch 1, das ferner ein Anzeigen der Textnachricht nur dann umfasst, wenn sich der Triebwerksbetriebsparameter, der die Änderung des Gesamtbetriebszustands hervorgerufen hat, außerhalb eines bestimmten Bereichs befindet.

3. Verfahren nach Anspruch 2, das ein Anzeigen der Textnachricht in einer Betriebsparameteranzeige (435) umfasst, die sich in dem Icon (430) befindet, sodass die Betriebsparameteranzeige leer ist, wenn das Triebwerk abgeschaltet ist, gestartet wird, oder normal arbeitet, und sodass die Betriebsparameteranzeige den Triebwerksbetriebsparameter angibt, der die Änderung in dem Gesamtbetriebszustand hervorgerufen hat, wenn das Triebwerk nicht normal arbeitet.

4. Verfahren nach einem der Ansprüche 1 bis 3, wobei die mehreren Triebwerksbetriebsparameter ausgewählt sind unter Triebwerks-UpM, Schub, Abgasdruckverhältnis, Abgastemperatur, Öldruck, Öltemperatur, Ölmenge, Treibstofffluss, Brennkammerbrennerdruck und Vibration.

5. Verfahren nach einem der Ansprüche 1 bis 4, wobei ein Anweisen der Anzeige eines Icons umfasst, die Anzeige eines Icons mit einer Form (433; 533) anzuweisen, die repräsentativ für das Luftfahrzeugtriebwerk ist.

6. Verfahren nach einem der Ansprüche 1 bis 5, wobei ein Anweisen einer Änderung der Anzeige des Icons ein Anweisen einer Änderung einer Liniendicke des Icons umfasst.

7. Verfahren nach einem der Ansprüche 1 bis 6, wobei ein Anweisen einer Änderung der Anzeige des Icons ein Anweisen einer Änderung einer Linienintensität des Icons umfasst.

8. Verfahren nach einem der Ansprüche 1 bis 7, wobei ein Anweisen einer Änderung der Anzeige des Icons ein Anweisen einer Änderung einer Hintergrundschattierung des Icons umfasst.

9. Verfahren nach einem der Ansprüche 1 bis 8, wobei ein Anweisen der Anzeige eines Icons ein Anweisen der Anzeige eines einer Identität des Luftfahrzeugtriebwerks entsprechenden Textes umfasst.

10. Verfahren nach einem der Ansprüche 1 bis 9, das ferner ein Anweisen der Anzeige einer Informationstextnachricht (436; 536) umfasst, die dem Zustand des Luftfahrzeugtriebwerks entspricht.

11. Verfahren nach einem der Ansprüche 1 bis 10, das ferner ein Anzeigen einer graphischen Repräsentation eines tatsächlichen und verfügbaren Triebwerksschubs zusätzlich zu dem Icon umfasst.

12. Verfahren nach einem der Ansprüche 1 bis 11, das ferner ein Anweisen einer Anzeige entsprechend Pilotenanweisungen zumindest zum Teil auf Basis des Gesamtbetriebszustands des Luftfahrzeugtriebwerks umfasst.

13. Verfahren nach einem der Ansprüche 1 bis 12, das ferner umfasst:
Anweisen einer Anzeige, die einer ersten Pilotenanweisung entspricht, wenn der Gesamtbetriebszustand des Luftfahrzeugtriebwerks dem ersten Gesamtbetriebszustand entspricht; und
Anweisen einer Anzeige, die einer zweiten Pilotenanweisung entspricht, wenn der Gesamtbetriebszustand des Luftfahrzeugtriebwerks dem zweiten Gesamtbetriebszustand entspricht, wobei sich die zweite Pilotenanweisung von der ersten Pilotenanweisung unterscheidet.

14. Verfahren nach Anspruch 13, das ferner umfasst:
Anweisen einer Anzeige eines ersten sichtbaren Hinweises, der der ersten Pilotenanweisung entspricht; und
Anweisen einer Anzeige eines zweiten sichtbaren Hinweises, der der zweiten Pilotenanweisung entspricht.

15. Verfahren nach einem der Ansprüche 1 bis 14, wobei das Triebwerk nicht läuft, wenn der Gesamtbetriebszustand dem ersten Gesamtbetriebszustand entspricht und das Triebwerk innerhalb normaler Parameter läuft, wenn der Zustand dem zweiten Gesamtbetriebszustand entspricht;
wobei das Verfahren ferner umfasst:
Ändern einer Farbe des Icons in eine dritte Farbe, wenn der Gesamtbetriebszustand des Luftfahrzeugtriebwerks in einen dritten Gesamtbetriebszustand wechselt, bei dem das Luftfahrzeugtriebwerk mit einer Fehlfunktion arbeitet, die eine Verringerung der Triebwerksleistung erfordert; und
Ändern einer Farbe des Icons in eine vierte Farbe, wenn der Gesamtbetriebszustand des Luftfahrzeugtriebwerks in einen vierten Gesamtbetriebszustand wechselt, bei dem das Luftfahrzeugtriebwerk mit einer Fehlfunktion arbeitet, die ein Abschalten des Luftfahrzeugtriebwerks erfordert.

16. Verfahren nach einem der Ansprüche 1 bis 15, wobei das Luftfahrzeugtriebwerk ein erstes Luftfahrzeugtriebwerk und das Icon ein erstes Icon ist und wobei das Verfahren ferner umfasst:
Anweisen der Anzeige eines zweiten Icons, das einen Gesamtbetriebszustand eines zweiten Luftfahrzeugtriebwerks angibt, wobei der Gesamtbetriebszustand des zweiten Luftfahrzeugtriebwerks aus zumindest einem Triebwerksbetriebsparameter des zweiten Luftfahrzeugtriebwerks bestimmt wird; und
Anweisen einer Änderung der Anzeige des zweiten Icons, wenn sich der Gesamtbetriebszustand des zweiten Luftfahrzeugtriebwerks ändert.

17. Computerlesbares Medium, dessen Inhalte eine Computervorrichtung veranlassen, gemäß einem Verfahren nach einem der vorhergehenden Ansprüche zu arbeiten.

18. Computersystem, das zum Ausführen eines Verfahrens nach einem der Ansprüche 1 bis 16 programmiert ist.

## Revendications

1. Procédé pour afficher des informations sur un moteur d'aéronef, comprenant :
la réception d'une pluralité de signaux correspondant à la pluralité de paramètres de fonctionnement de moteur ; et
si la totalité des paramètres de fonctionnement de moteur se trouvent dans des plages correspondantes, la détermination du fait que l'état de fonctionnement général du moteur d'aéronef est un premier état de fonctionnement général ; ou
si moins de la totalité des paramètres de fonctionnement de moteur se trouvent dans les plages correspondantes, la détermination du fait que l'état de fonctionnement général du moteur d'aéronef est un second état de fonctionnement général ;
la commande de l'affichage (430 ; 530) d'une icône (431 ; 531) qui indique un état de fonctionnement général qualitatif d'un moteur d'aéronef, l'état de fonctionnement général étant déterminé à partir de la pluralité de paramètres de fonctionnement de moteur ; et
la commande d'un changement de l'affichage de l'icône lorsque l'état de fonctionnement général du moteur d'aéronef change du premier état de fonctionnement général au second état de fonctionnement général, le changement incluant un changement d'une couleur de l'icône d'une première couleur à une seconde couleur différente de la première couleur ; et
**caractérisé en ce que**
la commande de l'affichage d'un message textuel (435 ; 535) au moins à proximité de l'icône correspondant à la cause du changement du premier état de fonctionnement général au second état de fonctionnement général.

2. Procédé selon la revendication 1, comprenant en outre l'affichage du message textuel uniquement lorsque le paramètre de fonctionnement de moteur qui a provoqué le changement de l'état de fonctionnement général se trouve en dehors d'une plage particulière.

3. Procédé selon la revendication 2, comprenant l'affichage du message textuel sur un affichage de paramètres de fonctionnement (435) inclus dans l'icône (430) de telle sorte que l'affichage de paramètres de fonctionnement est vierge lorsque le moteur est coupé, démarre ou fonctionne normalement, et de telle sorte que l'affichage de paramètres de fonctionnement indique le paramètre de fonctionnement de moteur qui a provoqué le changement de l'état de fonctionnement général lorsque le moteur ne fonctionne pas normalement.

4. Procédé selon l'une quelconque des revendications 1 à 3, dans lequel la pluralité de paramètres de fonctionnement du moteur est choisie parmi le régime du moteur, la poussée, le rapport de pression d'échappement, la température du gaz d'échappement, la pression d'huile, la température de l'huile, la quantité d'huile, le débit de carburant, la pression du brûleur de chambre de combustion et la vibration.

5. Procédé selon l'une quelconque des revendications 1 à 4, dans lequel la commande de l'affichage d'une icône inclut la commande de l'affichage d'une icône ayant une forme (433 ; 533) représentative du moteur d'aéronef.

6. Procédé selon l'une quelconque des revendications 1 à 5, dans lequel la commande d'un changement de l'affichage de l'icône inclut la commande d'un changement d'une épaisseur de ligne de l'icône.

7. Procédé selon l'une quelconque des revendications 1 à 6, dans lequel la commande d'un changement de l'affichage de l'icône inclut la commande d'un changement d'une intensité de ligne de l'icône.

8. Procédé selon l'une quelconque des revendications 1 à 7, dans lequel la commande d'un changement de l'affichage de l'icône inclut la commande d'un changement d'un ombrage d'arrière-plan de l'icône.

9. Procédé selon l'une quelconque des revendications 1 à 8, dans lequel la commande de l'affichage d'une icône inclut la commande de l'affichage de texte correspondant à une identité du moteur d'aéronef.

10. Procédé selon l'une quelconque des revendications 1 à 9, comprenant en outre la commande de l'affichage d'un message textuel informationnel (436 ; 536) correspondant à l'état du moteur d'aéronef.

11. Procédé selon l'une quelconque des revendications 1 à 10, comprenant en outre l'affichage d'une représentation graphique de la poussée de moteur réelle et disponible en plus de l'icône.

12. Procédé selon l'une quelconque des revendications 1 à 11, comprenant en outre la commande d'un affichage correspondant aux instructions du pilote basées au moins en partie sur l'état de fonctionnement général du moteur d'aéronef.

13. Procédé selon l'une quelconque des revendications 1 à 12, comprenant en outre :
la commande d'un affichage correspondant à une première instruction de pilote lorsque l'état de fonctionnement général du moteur d'aéronef est le premier état de fonctionnement général ; et
la commande d'un affichage correspondant à une seconde instruction de pilote lorsque l'état de fonctionnement général du moteur d'aéronef est le second état de fonctionnement général, la seconde instruction de pilote étant différente de la première instruction de pilote.

14. Procédé selon la revendication 13, comprenant en outre :
la commande d'un affichage d'un premier repère visuel correspondant à la première instruction de pilote ; et
la commande d'un affichage d'un second repère visuel correspondant à la seconde instruction de pilote.

15. Procédé selon l'une quelconque des revendications 1 à 14, dans lequel le moteur ne fonctionne pas lorsque l'état de fonctionnement général est le premier état de fonctionnement général et le moteur fonctionne dans les limites normales lorsque l'état est le second état de fonctionnement général ;
le procédé comprenant en outre :
le changement d'une couleur de l'icône à une troisième couleur lorsque l'état de fonctionnement général du moteur d'aéronef passe à un troisième état de fonctionnement général dans lequel le moteur d'aéronef fonctionne avec un dysfonctionnement qui requiert une réduction de la puissance du moteur ; et
le changement d'une couleur de l'icône à une quatrième couleur lorsque l'état de fonctionnement général du moteur d'aéronef passe à un quatrième état de fonctionnement général dans lequel le moteur d'aéronef fonctionne avec un dysfonctionnement qui requiert une coupure du moteur d'aéronef.

16. Procédé selon l'une quelconque des revendications 1 à 15, dans lequel le moteur d'aéronef est un premier moteur d'aéronef et l'icône est une première icône, et dans lequel le procédé comprend en outre :
la commande de l'affichage d'une seconde icône qui indique un état de fonctionnement général d'un second moteur d'aéronef, l'état de fonctionnement général du second moteur d'aéronef étant déterminé à partir d'au moins un paramètre de fonctionnement d'aéronef du second moteur d'aéronef ; et
la commande d'un changement de l'affichage de la seconde icône lorsque l'état de fonctionnement général du second moteur d'aéronef change.

17. Support lisible par ordinateur dont le contenu amène un dispositif informatique à fonctionner selon le procédé de l'une quelconque des revendications précédentes.

18. Système informatique programmé pour exécuter le procédé selon l'une quelconque des revendications 1 à 16.
